# EUROPEAN PATENT APPLICATION

(11) **EP 1 353 491 A1**
(43) Date of publication of application: **15.10.2003**
(21) Application number: 02076456.9
(22) Date of filing: 12.04.2002
(51) Int. Cl.: H04M 17/00

(54) **Rewarding prepaid telecommuncation customers**

(60) Divisional application: 03076035.9
(71) Applicant: Koninklijke KPN N.V., 9726 AE Groningen (NL)
(72) Inventor: van Tonder, François, 1140 Brussels (BE)
(74) Representative: Wuyts, Koenraad Maria

(57) **Abstract**

Method for enabling a telecommunications service provider, in particular in the field of prepaid mobile services, to reward certain service customers on the basis of characteristics, chosen by the service provider, without having to interfere with billing systems. To this end, the chosen characteristics are stored and kept up to date in a database, in the form of a user profile and the data relating to rewards in a rewards database; the rewarding takes place at the moment the customer wishes to recharge his prepaid card.

## Description

### FIELD OF THE INVENTION

The present invention is related to telecommunications services, in particular to rendering prepaid telecommunications services.

### BACKGROUND OF THE INVENTION

Prepaid telecommunications services are known. As the name implies, these are services for which the customer has paid in advance. One way of enabling a customer to use a telecommunications service in a prepaid fashion is letting the customer purchase a prepaid telephone calling card. Such cards are available in fixed value increments, such as 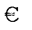 10, 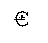 20, etcetera. A 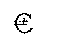 10 card, for example, provides the card holder with 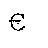 10 worth of telephone time to make telephone calls. In Europe, such prepaid cards are generally used in combination with mobile telephones in cellular systems, for example, GSM systems. Prepaid-card users never can run up a large bill, because charges are limited to the card's face value; moreover they avoid having to pay monthly subscription bills. Once a customer for a telecommunications service has acquired a mobile telephone for prepaid services and has used it for some time, he has to "recharge" the corresponding calling card as the monetary value registered on the card decreases to a threshold value or to zero.

Service providers and network operators, such as telephone operating companies are constantly looking for ways to attract new customers. One way is to reward users of a service with bonus points or credits in proportion to the amount of their spending or use. Such a method is known from WO 01/89190. This method allows for rendering reduced-cost wireless telephone service to registered users in response to predetermined actions by those users. Reducing costs, for users concerned, is accomplished by immediately applying the reduction while rendering the service. This entails a service charge reduction calculation, i.e., interfering with billing systems, in a "real-time" fashion. Moreover, this known method is not aimed at rendering services in a prepaid fashion and does not suggest solutions tailored to this market.

### SUMMARY OF THE INVENTION

It is an object of the invention to eliminate the drawbacks of the prior art and to provide a method which enables a service provider to reward certain service customers on the basis of characteristics, chosen by the service provider, without having to interfere with billing systems.

To this end, the chosen characteristics are stored and kept up to date in a database, in the form of a user profile and the data relating to rewards in a Rewards Database; the rewarding takes place at the moment the customer wishes to "recharge" his prepaid card, i.e., at a moment chosen by the customer.

According to a first aspect of the present invention, a method is provided for rendering telecommunication services, comprising the steps of:
A) providing a user of the services a user account with a monetary value;
B) providing the user access to a service provider network;
C) rendering the services to the user in exchange for decreasing the monetary value of the user account by an amount determined by the service provider;
D) increasing the monetary value of the account by the user by a further monetary value, at a moment in time after the account has been provided;
E) storing and maintaining, in a database, a user profile for at least one of the users of the services;
F) storing and maintaining data relating to a still further monetary value, to be awarded to the at least one user of the services;
G) increasing the further monetary value of step D) by the still further monetary value, at the expense of the service provider and in dependence of the user profile for the user performing step D), in accordance with rules set by the service provider.
Step G) is performed without any need to interfere with existing billing systems and the period during which rewards, with the still further monetary value, are receivable can be easily determined (and changed) by the service provider.

According to a second aspect of the present invention, a system is provided for rendering telecommunications services, comprising:
- means for providing a user of the services a user account with a monetary value;
- means for providing the user access to a service provider network;
- means for rendering the services to the user, coupled to means for decreasing the monetary value of the user account by an amount, related to the service rendered, and determined by the service provider;
- means arranged for enabling the user to increase the monetary value of the user account by a further monetary value;
- database means for storing and maintaining a user profile for at least one of users of the services;
- database means for storing and maintaining data relating to a still further monetary value, to be awarded to the at least one user of the services;
- means arranged for enabling the service provider to increase the further monetary value by the still further monetary value, in dependence of the user profile and in accordance with rules set by the service provider.

### BRIEF DESCRIPTION OF THE DRAWINGS

The invention will be further explained with reference to drawings, in which:
Fig. 1 depicts an environment within a telecommunications-service rendering system to which a database for storing reward data according to an embodiment of the present invention has been added;
Fig. 2 depicts the structure of a record in the added database according to an embodiment of the present invention;
Fig. 3 shows the steps in rendering the service according to the present invention.

### EXEMPLARY EMBODIMENTS

The present invention is part of a method and a system for rendering telecommunication services, in particular for rendering prepaid wireless telecommunications services, and more in particular for rendering prepaid services in a cellular mobile system like, e.g., a GSM-system.

A customer for telecommunications services who wants to use a mobile system in a prepaid fashion acquires a mobile handset and at the same time gets an account with a service provider. This account represents a monetary value which is to be used when making phone calls. The amount due for a phone call is deducted from the monetary value of the account, each time a call is made, until the remaining value is at a threshold value or zero. When that happens, the customer has the option to "recharge" his account in order to be able to continue using the telecommunications services. Recharging can take place in several ways. Usually this involves making a phone call to a free service number, followed by a procedure in which the customer gives requested input to the system, either by voice commands or by keying in information on his handset. This information can comprise a credit card number, a PIN (Personal Identification Number), or a number to be found on a "scratch card". Such cards are available to prepaid customers in fixed value increments, such as 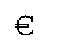 10, 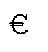 20, etcetera. A 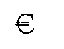 10 card, for example, provides the card holder with 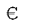 10 worth of telephone time to make telephone calls. In the case of the use of a scratch card, the customer has to scratch the surface of the card in order to reveal a number to be used during the recharging procedure. In known prepaid systems, the amount available for making phone calls is registered and increased or decreased, as the case may be, in a database coupled to the telecommunications network, and not in the handset itself. Purchasing a prepaid telephone calling card in these cases means "buying" a piece of information that is needed to change monetary value data in a database, maintained by or for the service provider involved.

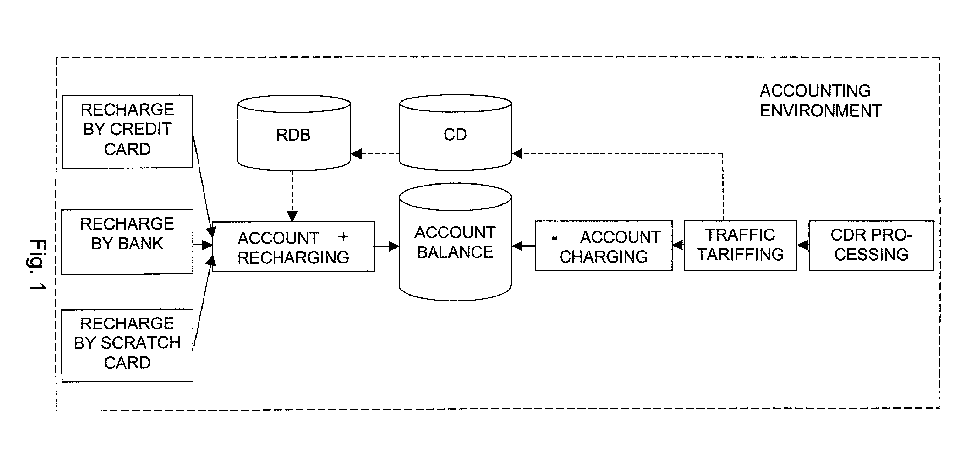

Referring now to Fig. 1, a Reward Database (RDB) is added to the accounting environment of the telecommunications system, in a system according to the present invention. In the embodiment described here, user profiles are kept in a customer database (CD). A user profile may contain data relating to the calling behaviour of a customer, as well as personal details, e.g., his or her birthday. The calling behaviour may be deduced from the various Call Detail Records (CDRs) generated each time the customer makes a phone call. Based on the user profile for a particular customer, a record in the RDB is created at the start of the period during which rewards will be given.

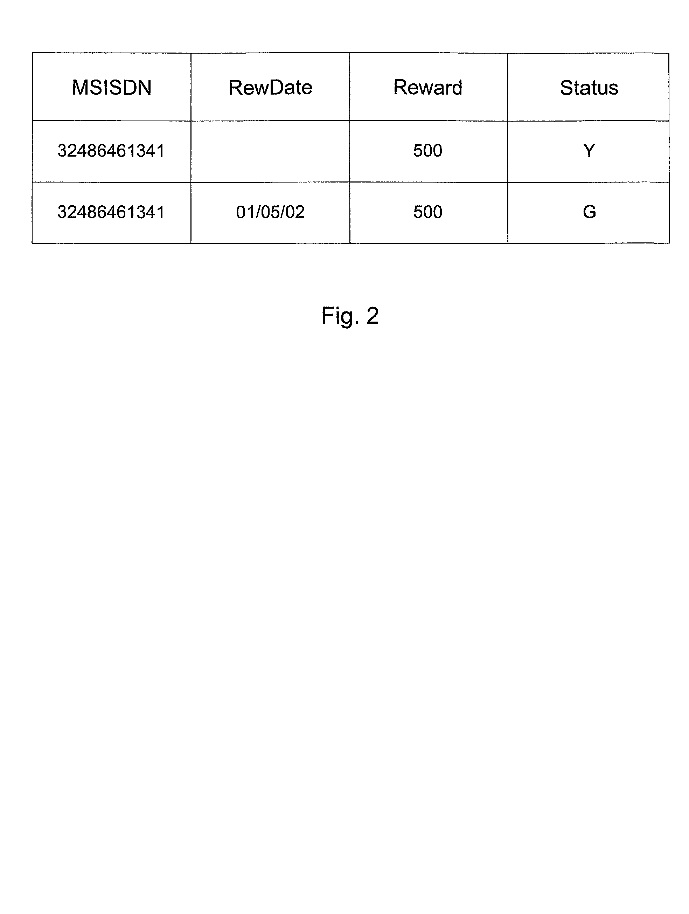

The structure of records in a RDB according to the present invention is depicted in Fig. 2. The MSISDN is the unique number identifying a particular handset. Accounts and rewards are coupled to the various handsets, registered with the service provider involved. The field RewDate contains the date when the reward has been granted. The field Reward contains the value, in the chosen currency (in this case eurocent), of the reward. The field Status contains:
- Y for: the reward can still be granted;
- G for: the reward has been granted (see RewDate for the date;
- N for: the reward cannot be granted anymore.

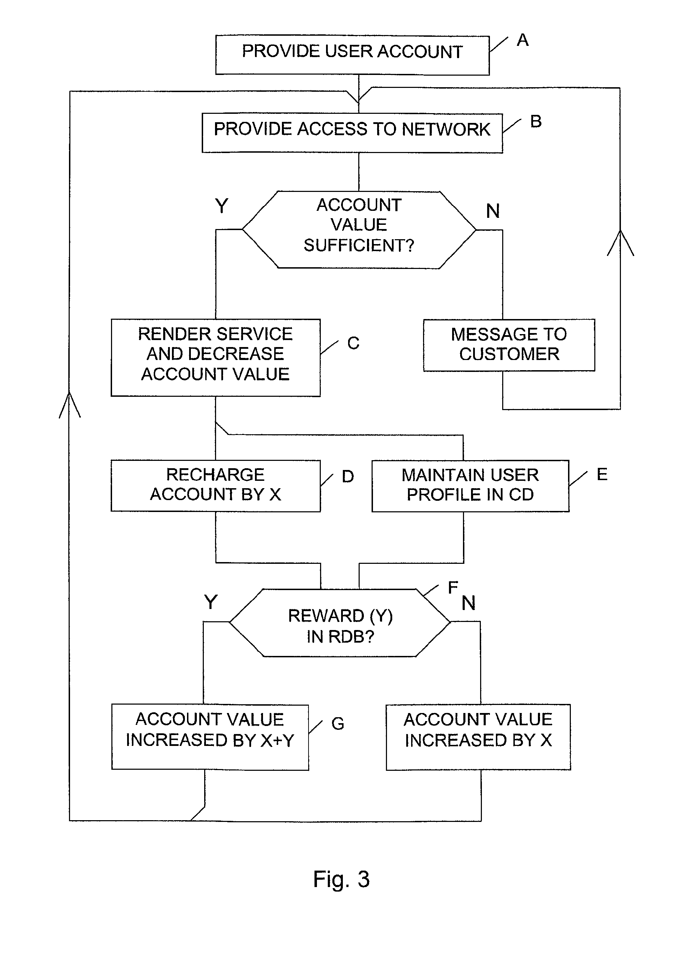

Fig. 3 shows the steps in rendering the service according to the present invention. In step A) the user is provided an account with the chosen service provider. Usually this entails acquiring a mobile handset and a starting monetary value to be spent on making calls. Access to the service provider network is provided (step B)), the customer using the acquired handset. Each time the network is accessed, the monetary value in the user's account is checked. If this value is sufficient to make a call, the service is rendered and the value in the account is decreased by the amount due for making the call (step C)). If this value is insufficient, the customer gets a message; he should then recharge his account in order to continue using the telecommunications service. At the time the customer takes action to recharge his account (step D)), the Reward Database (RDB) is checked for a reward for this customer, taking into account his user profile in database CD (step F)). If this check results in the conclusion that a reward is due, then the value of such a reward is added to the monetary value by which the customer wants to "top up" his account (step G)).

## Claims

1. Method for rendering telecommunication services, comprising the steps of:
A) providing a user of the services a user account with a monetary value;
B) providing the user access to a service provider network;
C) rendering the services to the user in exchange for decreasing the monetary value of the user account by an amount determined by the service provider;
D) increasing the monetary value of the user account by the user by a further monetary value, at a moment in time after the user account has been provided;
E) storing and maintaining, in a database, a user profile for at least one of the users of the services;
F) storing and maintaining data relating to a still further monetary value, to be awarded to the at least one user of the services;
G) increasing the further monetary value of step D) by the still further monetary value, at the expense of the service provider and in dependence of the user profile for the user performing step D), in accordance with rules set by the service provider.

2. Method according to claim 1, the user profile comprising Call Detail Records (CDRs) of the user involved, and the rules taking those CDRs into account.

3. Method according to claim 1, the user profile comprising personal details of the user involved, e.g., the date of his or her birthday, and the rules taking these details into account.

4. Method according to claim 1, 2 or 3, the telecommunications services comprising wireless telephone services.

5. System for rendering telecommunications services, comprising:
- means for providing a user of the services a user account with a monetary value;
- means for providing the user access to a service provider network;
- means for rendering the services to the user, coupled to means for decreasing the monetary value of the user account by an amount, related to the service rendered, and determined by the service provider;
- means arranged for enabling the user to increase the monetary value of the user account by a further monetary value;
- database means for storing and maintaining a user profile for at least one of users of the services;
- database means for storing and maintaining data relating to a still further monetary value, to be awarded to the at least one user of the services;
- means arranged for enabling the service provider to increase the further monetary value by the still further monetary value, in dependence of the user profile and in accordance with rules set by the service provider.

6. System according to claim 5, the user profile comprising Call Detail Records (CDRs) of the user involved, and the rules taking those CDRs into account.

7. System according to claim 5, the user profile comprising personal details of the user involved, e.g., the date of his or her birthday, and the rules taking these details into account.

8. System according to claim 5, 6 or 7, the telecommunications services comprising wireless telephone services.
